# FASCICULE DE BREVET EUROPEEN

(11) **EP 1 125 687 B1**
(45) Date de publication et mention de la délivrance du brevet: **01.07.2009**
(21) Numéro de dépôt: 01460009.2
(22) Date de dépôt: 12.02.2001
(51) Int. Cl.: B24B 45/00, F16B 2/18, F16B 39/02, B24B 23/02

(54) **Ecrou de serrage et de blocage d'un outil, tel qu'un disque d'une machine d'usinage sur l'arbre de ladite machine**
Mutter zum Spannen und Sichern eines Werkzeuges, sowie eine Scheibe auf der Spindel einer Bearbeitungsmaschine
Nut for blocking and clamping a tool, like a disc on the spindle of a machine tool

(30) Priorité: 16.02.2000 FR 0001993
(43) Date de publication de la demande: 22.08.2001
(73) Titulaire: DIAMANT BOART Société Anonyme, 1190 Bruxelles (BE)
(72) Inventeur: Telo, Antonio, 41260 La Chaussee St.-Victor (FR)
(74) Mandataire: Maillet, Alain

(56) Documents cités:
- US-A- 4 976 071
- US-A- 5 158 331

## Description

La présente invention concerne un écrou de serrage et de blocage d'un outil, tel qu'un disque d'une machine d'usinage sur l'arbre de ladite machine, comme par exemple publié dans le brevet US-A-4976071.

Certaines machines d'usinage sont pourvues d'un arbre à l'extrémité libre duquel peut être monté et serré, par exemple entre deux flasques dont l'un est solidaire de l'arbre de ladite machine et au moyen d'un écrou, un outil. Un tel outil est par exemple un disque tel qu'un disque de ponçage, un disque de coupe ou un disque de tronçonnage.

Lorsqu'il est nécessaire de changer d'outil, soit parce que celui-ci est usé, soit parce que celui qui est monté ne correspond plus à l'usage que l'on veut faire de la machine, il est nécessaire d'utiliser une clé pour desserrer ledit écrou puis d'extraire l'écrou et l'outil. On change alors l'outil qui est alors resserré au moyen de la même clé.

Ces opérations ne sont pas en soi complexes, mais il arrive souvent que la clé ne se trouve pas à l'endroit où l'on s'attendait à ce qu'elle fût. Il en résulte pour le moins une perte de temps qui peut s'avérer, si l'opération de changement de disque doit se répéter, dommageable.

Le but de la présente invention est donc d'apporter une solution à ce problème en prévoyant un écrou qui ne nécessite plus de clé pour le serrage de l'outil sur l'arbre de la machine d'usinage, conformément aux caractéristiques de la revendication 1.

Des caractéristiques additionnelles de l'invention font l'objet des sous-revendications 2 à 7.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Les Figs. la et 1b sont des vues en coupe et de dessus d'un écrou selon la présente invention, et

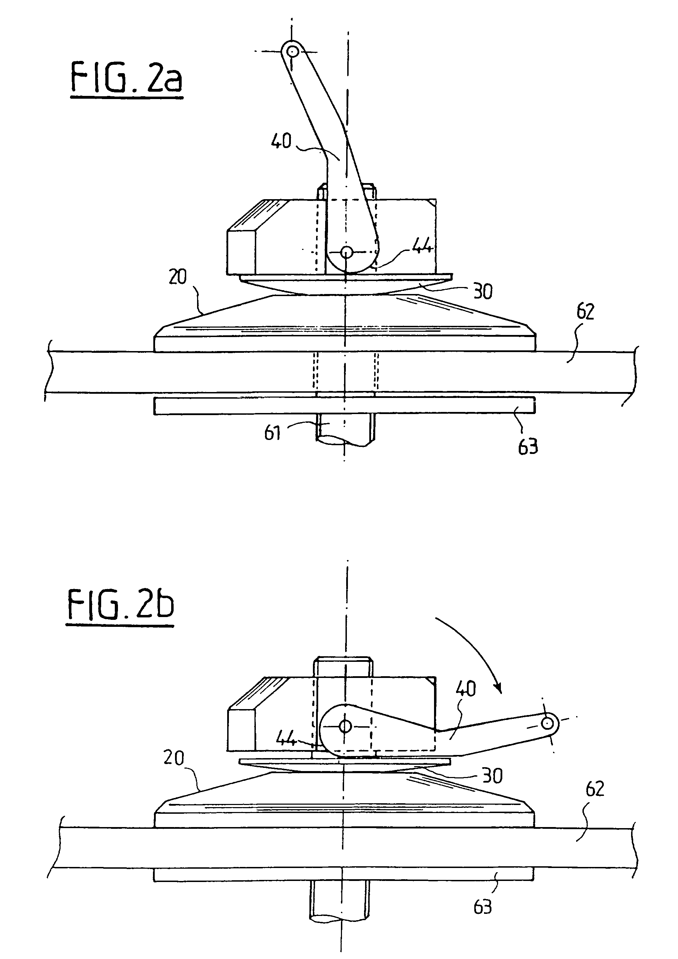

Les Figs.2a et 2b sont des vues en plan d'un écrou selon la présente invention dont l'organe de commande se trouve dans deux positions extrêmes, l'une où il serre et bloque un outil et l'autre où il ne le serre pas.

L'écrou représenté à la Fig. la est essentiellement constitué d'une noix 10 dont la tête 11 est prolongée axialement par une partie tubulaire 12. La noix 10 est percée d'un trou fileté 13 la traversant de part en part de manière à pouvoir être vissée sur l'arbre moteur d'une machine d'usinage dont l'outil, par exemple un disque, a besoin d'être serré.

Sur la partie tubulaire 12, est monté un flasque 20 qui est arrêté en translation sur la partie 12 au moyen d'un circlip 21. Le flasque 20 présente une section tronconique et une surface d'appui 22 relativement large à comparer aux dimensions de la noix 10. Comme on le verra par la suite, cette surface 22 est destinée à venir en appui sur l'outil à serrer.

Entre la noix 10 et le flasque 20, est monté un élément élastique 30 qui présente une forme légèrement tronconique avec le sommet tourné vers le flasque 20.

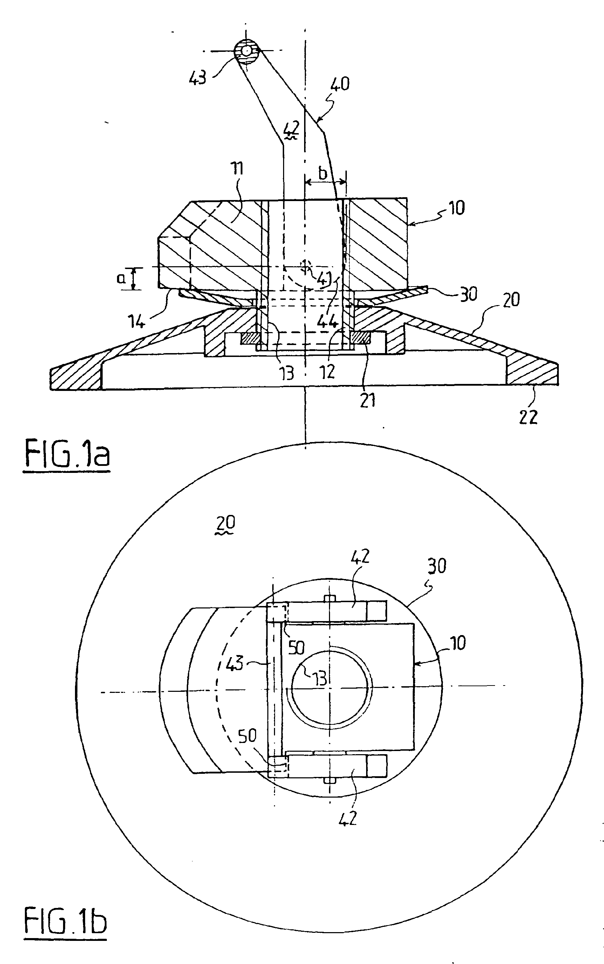

A cheval sur la noix 10 et pouvant pivoter autour d'un axe de pivotement 41, est prévu un organe de commande, ici constitué d'un levier 40 qui, dans l'exemple de réalisation représenté comporte deux bras latéraux 42 (un seul et visible sur la Fig. 1) reliés entre eux par leurs extrémités libres par un rond 43.

La partie basse du levier 40 et, en particulier, de chaque bras 42, présente autour de l'axe de pivotement 41 une came 44. La came 44 présente une forme arrondie reliant deux points respectivement à des distances a et b de l'axe de pivotement 41 qui sont différentes. En particulier, la distance parallèle à l'axe de l'écrou 10 est inférieure à la distance b qui lui est perpendiculaire. La distance a est inférieure à la distance qui sépare l'axe 41 de la face 14 de la noix 10 qui est tournée vers le flasque 20, alors que la distance b est supérieure à cette distance séparant l'axe 41 de la face 14.

Lorsque le levier 40 est dans une position où il est sensiblement parallèle à l'axe de l'écrou, chaque bras 42 se trouve en appui contre un épaulement 50 formé dans la noix 10.

Le fonctionnement de l'écrou de l'invention est maintenant explicité en relation avec les Figs. 2a et 2b. A la Fig. 2a, l'écrou de l'invention est vissé sur la tige filetée 61 de la machine, laquelle reçoit également un disque 62. Ce disque 62 est en appui sur un flasque 63 solidaire de la vis 61. Le levier 40 de l'écrou est dans sa position relevée sensiblement parallèle à l'axe de l'écrou et sa came 44 n'est pas en appui sur l'élément élastique 30. Ainsi, le disque 62 n'est pas serré entre le flasque 20 et le flasque 63.

A la Fig. 2a, subsiste même un jeu entre le disque 62 et le flasque 63.

A la Fig. 2b, on a représenté le même écrou monté sur la même machine pour le serrage du même disque 62. Le levier 40 est cette fois-ci abaissé et se trouve maintenant dans une direction sensiblement perpendiculaire à l'axe de la machine. La came 44 vient appuyer sur l'élément élastique 30 et transmet cet effort d'appui au flasque 21, puis au disque 62 qui vient alors reposer avec force sur le flasque 63. Le disque 62 est ainsi serré entre les deux flasques 20 et 63 avec une force qui est déterminée par la caractéristique élastique de l'élément élastique 30.

On peut constater qu'à la Fig. 2a, les épaulements 50 jouent le rôle de butée évitant que le levier 40 puisse prendre une position perpendiculaire à l'axe, symétrique de celle qui est représentée à la Fig. 2 et pour laquelle on n'obtiendrait pas le serrage du disque 62 entre les flasques 20 et 63.

## Revendications

1. Ecrou pour le serrage et le blocage d'un outil, tel qu'un disque, d'une machine d'usinage sur un arbre de ladite machine, **caractérisé en ce qu'**il est constitué d'une noix (10) prévue pour être vissée sur ledit arbre (61) et prolongée axialement par une partie tubulaire (12), d'un flasque (20) monté et arrêté en translation sur ladite partie tubulaire (12), ledit flasque présentant une surface d'appui (22) destinée à appuyer sur ledit disque (62), d'un élément élastique (30) monté entre la tête (11) de ladite noix et ledit flasque (20) et d'un organe de commande (40) pouvant prendre toute position comprise entre une position où il est en appui sur ledit élément élastique (30) et exerce ainsi une force de serrage audit flasque (20) par l'intermédiaire dudit élément élastique et une autre position où il laisse ledit élément élastique (30) libre entre ladite tête (11) et ledit flasque (20).

2. Ecrou selon la revendication 1, **caractérisé en ce que** l'élément élastique (30) présente une forme légèrement tronconique avec le sommet tourné vers le flasque (20).

3. Ecrou selon la revendication 1 ou 2, **caractérisé en ce que** ledit organe de commande est constitué d'un levier qui est monté pivotant sur la tête (11) de la noix (10) autour d'un axe (41) perpendiculaire à l'axe dudit écrou, ledit levier comportant au moins une came (44) présentant une forme arrondie reliant deux points respectivement à des distances de l'axe de pivotement qui sont différentes, ladite came (44) dans une position dudit levier se trouvant en appui dudit élément élastique et, dans l'autre position dudit levier, laissant libre ledit élément élastique.

4. Ecrou selon la revendication 3, **caractérisé en ce que** ledit levier est constitué de deux bras latéraux à ladite tête (11) de ladite noix (10), chaque came (44) étant formée autour de l'axe de pivotement du bras correspondant.

5. Ecrou selon une des revendications précédentes, **caractérisé en ce que** ledit organe de commande (40) est prévu pour que, lorsqu'il laisse ledit élément élastique (30) libre, il soit en saillie sur ladite tête (11) de ladite noix et pas lorsqu'il est en appui sur ledit élément élastique (30).

6. Ecrou selon la revendication 3 ou 4, **caractérisé en ce que** ledit levier (40) est prévu, lorsqu'il laisse ledit élément élastique (30) libre, pour se trouver sensiblement dans l'axe dudit écrou et lorsqu'il est en appui sur ledit élément élastique (30), sensiblement perpendiculaire audit axe.

7. Ecrou selon la revendication 6, **caractérisé en ce que** ledit levier (40) est, dans la position où il laisse ledit élément élastique (30) libre, en butée contre au moins un épaulement (50) prévu sur la tête (11) de ladite noix (10).

## Claims

1. Nut for clamping and locking a tool, such as a disc, of a machine tool on a shaft of the said machine, **characterised in that** it is composed of a nut body (10), which is provided in order to be screwed on to the shaft (61) and which is extended axially by a tubular portion (12), of a flange (20) mounted and secured against translation on the tubular portion (12), the flange having a bearing surface (22) which is to bear on the disc (62), of a resilient member (30) mounted between the head (11) of the nut body and the flange (20), and of a control member (40) which can assume any position between a position where it bears on the resilient member (30) and thus exerts a clamping force on the flange (20) by way of the resilient member and another position where it leaves the resilient member (30) free between the head (11) and the flange (20).

2. Nut according to claim 1, **characterised in that** the resilient member (30) has a slightly frustoconical shape with the top turned towards the flange (20).

3. Nut according to claim 1 or 2, **characterised in that** the control member is formed by a lever which is mounted to pivot on the head (11) of the nut body (10) about an axis (41) perpendicular to the axis of the nut, the lever comprising at least one cam (44) having a rounded shape connecting two points which are at different distances, respectively, from the pivoting axis, the cam (44), in one position of the lever, bearing on the resilient member and, in the other position of the lever, leaving the resilient member free.

4. Nut according to claim 3, **characterised in that** the lever is formed by two arms which are arranged laterally with respect to the head (11) of the nut body (10), each cam (44) being formed around the pivoting axis of the corresponding arm.

5. Nut according to any one of the preceding claims, **characterised in that** the control member (40) is provided to project from the head (11) of the nut body when it leaves the resilient member (30) free and not when it bears on the resilient member (30).

6. Nut according to claim 3 or 4, **characterised in that** the lever (40) is provided to be substantially along the axis of the nut when it leaves the resilient member (30) free and to be substantially perpendicular to the said axis when it bears on the resilient member (30).

7. Nut according to claim 6, **characterised in that** the lever (40) is, in the position where it leaves the resilient member (30) free, in abutment with at least one shoulder (50) provided on the head (11) of the nut body (10).

## Patentansprüche

1. Mutter zum Einspannen und Feststellen eines Werkzeugs, beispielsweise einer Scheibe, einer Maschine zur maschinellen Bearbeitung auf einer Spindel der Maschine, **dadurch gekennzeichnet, dass** sie aus einem Anlauf (10) besteht, der zum Aufschrauben auf die Spindel (61) vorgesehen und in axialer Richtung mittels eines rohrförmigen Abschnitts (12) verlängert ist, ferner aus einem Flansch (20), der auf dem rohrförmigen Abschnitt (12) angebracht und gegen eine Translationsbewegung gesichert ist, wobei der Flansch auf einer Abstützfläche (22), die zur Abstützung auf der Scheibe (62) vorgesehen ist, sowie aus einem elastischen Teil (30), das zwischen dem Kopf (11) des Anlaufs und dem Flansch (20) montiert ist, und aus einem Betätigungselement (40), das jede Position einnehmen kann, die zwischen einer Position, in dem es sich auf dem elastischen Teil (30) abstützt und somit eine Einspannkraft mittels des elastischen Teils auf den Flansch (20) ausübt, und einer anderen Position liegt, in welcher es das elastische Teil (30) zwischen dem Kopf (11) und dem Flansch (20) frei lässt.

2. Mutter nach Anspruch 1, **dadurch gekennzeichnet, dass** das elastische Teil (30) eine leicht kegelstumpfförmige Ausbildung aufweist, wobei das Oberteil dem Flansch (20) zugekehrt ist.

3. Mutter nach Anspruch 1 oder 2, **dadurch gekennzeichnet, dass** das Betätigungselement aus einem Hebel besteht, der auf dem Kopf (11) des Anlaufs (10) um eine Achse (41) schwenkbar gelagert ist, die senkrecht zur Achse der Mutter verläuft, wobei der Hebel mindestens einen Nocken (44) mit abgerundeter Form aufweist, welcher zwei Punkte, die sich jeweils in unterschiedlichem Abstand von der Schwenkachse befinden, verbindet, wobei der Nocken (44) in einer Position des Hebels das elastische Teil abstützt und in der anderen Stellung des Hebels das elastische Teil frei lässt.

4. Mutter nach Anspruch 3, **dadurch gekennzeichnet, dass** der Hebel aus zwei seitlich vom Kopf (11) des Anlaufs (10) liegenden Armen besteht, wobei jeder Nocken (44) um die Schwenkachse des entsprechenden Armes gebildet ist.

5. Mutter nach einem der vorhergehenden Ansprüche, **dadurch gekennzeichnet, dass** das Betätigungselement (4) in der Form vorgesehen ist, dass es dann, wenn es das elastische Teil (30) frei lässt, über den Kopf (11) des Anlaufs vorsteht, nicht aber dann, wenn es sich in Anlage auf dem elastischen Teil (30) befindet.

6. Mutter nach Anspruch 3 oder 4, **dadurch gekennzeichnet, dass** der Hebel (40) in der Form vorgesehen ist, dass er sich dann, wenn er das elastische Teil (30) frei lässt, im Wesentlichen auf der Achse der Mutter befindet, und sich dann, wenn er sich auf dem elastischen Teil (30) abstützt, im Wesentlichen senkrecht zu der Achse erstreckt.

7. Mutter nach Anspruch 6, **dadurch gekennzeichnet, dass** der Hebel (40) in der Position, in der er das elastische Teil (30) frei lässt, gegen mindestens einen Ansatz (50) anliegt, der auf dem Kopf (11) des Anlaufs (10) vorgesehen ist.
